# EUROPÄISCHE PATENTANMELDUNG

(11) **EP 4 786 807 A1**
(43) Veröffentlichungstag der Anmeldung: **05.08.2026**
(21) Anmeldenummer: 26150441.9
(22) Anmeldetag: 07.01.2026
(51) Int. Cl.: F16B 37/04

(54) **NUTSTEIN**

(30) Priorität: 04.02.2025 DE 202025100541 U
(71) Anmelder: Siegenia-Aubi KG, 57234 Wilnsdorf (DE)
(72) Erfinder: Schächt, Dieter, 42111 Wuppertal (DE); Wagner, Daniel, 57234 Wilnsdorf (DE)
(74) Vertreter: Freudenberg, Thomas

(57) **Zusammenfassung**

Die Erfindung betrifft einen Nutstein (1), der zur Kraftübertragung in eine T-förmige Nut (5) eines Konstruktionsprofils (13) einen Klemmbereich aufweist, wobei der Klemmbereich mit seiner Schmalseite in die Nut (5) des Profils (13) eintaucht und sich nach einem beim Montagevorgang vorgenommenen Verdrehen des Nutsteins (1) nach oben in der T-Nut (5) formschlüssig abstützt, wobei der Nutstein (1) eine Längserstreckung (3) und Breite (4) besitzt, die derart ausgestaltet sind, dass er in der Montageposition des Nutsteins (1) den Bereich der T-Nut (5) des Profils (13) so ausfüllt, dass ein Verdrehen des Nutsteins (1) nicht mehr möglich ist. Um einerseits ein zuverlässiges Verklemmen in der hinterschnittenen Nut zu ermöglichen und andererseits trotz Toleranz- und Maßabweichungen mit den Nutseitenwänden zusammen zu wirken ist vorgesehen, dass an dem Klemmbereich ein elastisch verformbares Element (15) angebracht ist, welches an einem Nutsteg (6, 7) der Nut (5) anliegt.

## Beschreibung

Die Erfindung betrifft einen Nutstein nach dem Oberbegriff des Anspruchs 1.

Nutsteine dieser Art sind bereits bekannt. Aus der DE 202013002553 U1 ist ein Nutstein nach dem Oberbegriff bereits bekannt. Es ist dabei ein Nutstein offenbart, der zur Kraftübertragung in eine T-förmige Nut eines Konstruktionsprofils einen Klemmbereich aufweist. Der Klemmbereich taucht mit seiner Schmalseite in die Nut des Profils ein. Der Klemmbereich stützt sich mit der Breitseite nach einem beim Montagevorgang vorgenommenen Verdrehen des Nutsteins nach oben in der T-Nut formschlüssig ab. Der Klemmbereich besitzt einen Verriegelungsbereich, der derart ausgestaltet ist, dass er in der Montageposition des Nutsteins den schmalen Bereich der T-Nut des Profils so ausfüllt, dass ein Verdrehen des Nutsteins nicht mehr möglich ist.

Ähnliche Ausgestaltungen sind aus der DE 7025063 U1 und der EP 1061217 A2 bekannt. Die Nutsteine sind aus Metall gefertigt, was die mechanische Belastbarkeit des Nutsteins und des dort benötigten Gewindes erhöht. Der Nutstein soll ohne weiteres mechanisches Hilfsmittel nach dem Einführen in die Nut um 90° verdreht werden und dann ohne weitere Drehung fixiert bleiben, bis die Befestigungsschraube den Nutstein in seine Klemmstellung einnimmt.

Problematisch dabei kann es sein, dass die Nutabmessungen aufgrund von Fertigungstoleranzen so schwanken, dass die Klemmbereiche nicht ausreichend anliegen, um dem Reibungs-Drehmoment der Schraubverbindung standzuhalten. Der Nutstein drückt die Nutseitenwände auseinander und dreht sich, ohne dass die Lage des Nutsteins relativ zur Befestigungsschraube verändert wird.

Aufgabe der Erfindung ist es daher einen Nutstein bereitzustellen, der einerseits ein zuverlässiges Verklemmen in der hinterschnittenen Nut ermöglicht und der andererseits trotz Toleranz- und Maßabweichungen mit den Nutseitenwänden zusammenwirkt.

Die Lösung sieht vor, dass an dem Klemmbereich ein elastisch verformbares Element angebracht ist, welches an der Längsseitenwand der T-Nut anliegt. Das elastische Element bewirkt ein sicheres Zusammenwirken des Nutsteins mit der T-Nut und gleicht Toleranzen oder unterschiedliche Maße oder Verformungen der T-Nut aus. Der mechanisch hochbelastete Klemmbereich kann weiterhin aus Metall bestehen und große Kräfte einleiten. Es kommt auch zu einer wünschenswerten Trennung der Materialien des Nutsteins einerseits und des Profils andererseits. Insbesondere bei Aluminium-Profilen kann es infolge der Bildung einer galvanischen Zelle zu unerwünschter Korrosion im Kontaktbereich kommen. Zudem ist durch die gewählte Anordnung das Bauteil mit dem Nutstein noch in der Beschlagaufnahmenut beweglich und gegebenenfalls entstehende Geräusche werden reduziert.

Um den Nutstein in einer Montagelage festzulegen sind auf der der Fläche zugewandten Oberseite des Fußes Rastausnehmungen vorgesehen und auf der Fläche des Bauteils sind Rastvorsprünge angebracht, welche in bevorzugten Befestigungslagen in die Rastausnehmungen eingreifen.

Um die Stabilität des Nutsteins zu maximieren ist vorgesehen, dass der Fuß als Metallteil ausgelegt ist.

Eine einfache Ausgestaltung sieht vor, dass der Fuß randoffene Ausnehmungen zur Aufnahme eines Befestigungsansatzes des elastischen Elements aufweist. Die zur Befestigung des elastischen Elements vorgesehenen Befestigungskanten können dadurch auf einfache Weise bereitgestellt werden.

Eine Weiterbildung sieht vor, dass der Fuß einen zentrisch angebrachten hülsenartigen Befestigungsansatz aufweist. Der hülsenartige Befestigungsansatz kann einteilig an einen plattenförmigen Fuß angeformt sein oder als hülsenartiges Ergänzungsteil über einen Kupplungsabschitt mit dem Fuß verbunden werden. Der Befestigungsansatz bildet auch die Drehachse des Nutsteins.

Um den Nutstein verdrehen zu können ist vorgesehen, dass der Befestigungsansatz einen Werkzeugeingriff aufweist.

Weitere vorteilhafte Ausgestaltungen ergeben sich aus den Zeichnungen. Es zeigt:
- Fig. 1: einen Nutstein in einer räumlichen Darstellung in Draufsicht,
- Fig. 2: einen Nutstein in einer räumlichen Darstellung in einer Ansicht von unten,

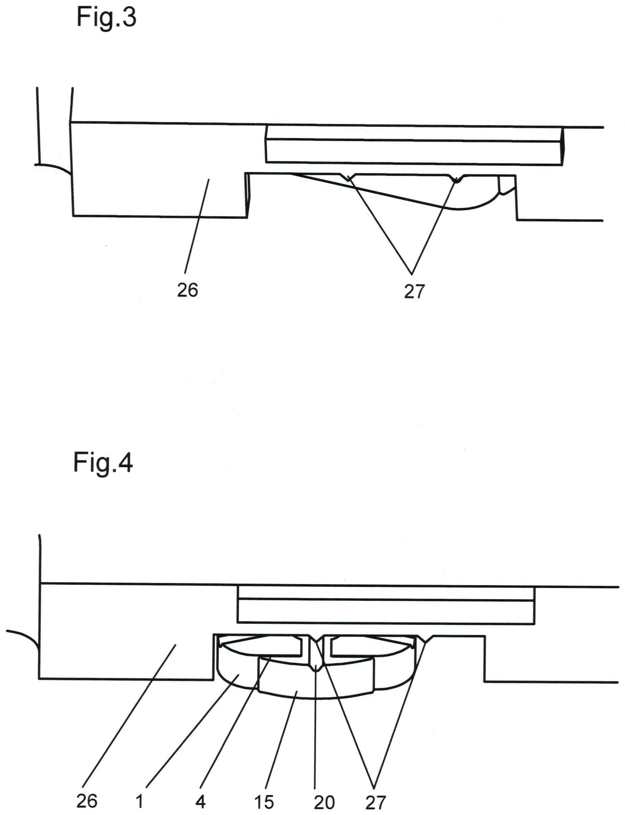

- Fig. 3: einen Ausschnitt eines Beschlagteils in Seitenansicht mit einem darunter angebrachten Nutstein,
- Fig. 4: einen Ausschnitt eines Beschlagteils in Seitenansicht mit einem darunter angebrachten Nutstein in verriegelter Position, und
- Fig. 5: einen Ausschnitt eines Flügelprofils.

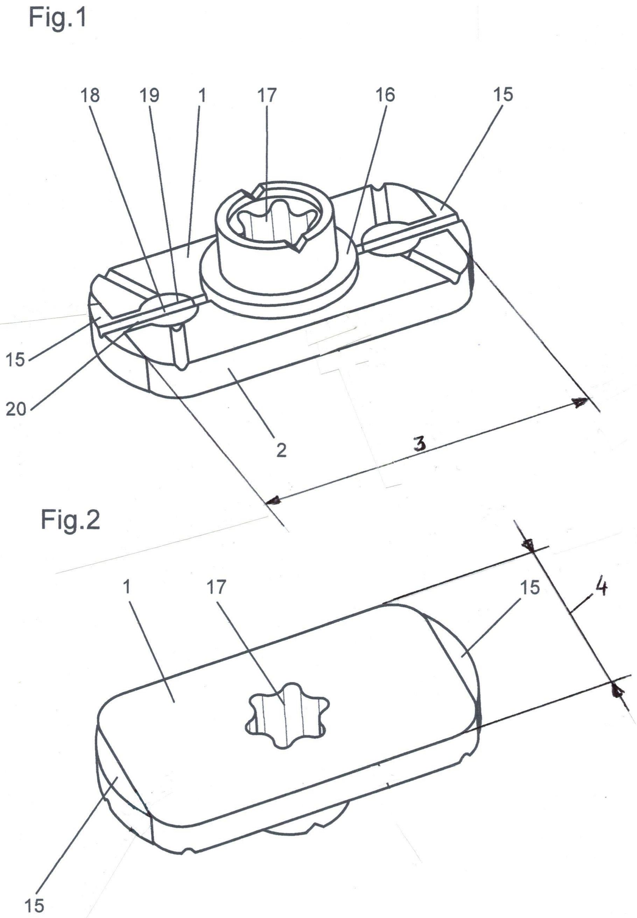

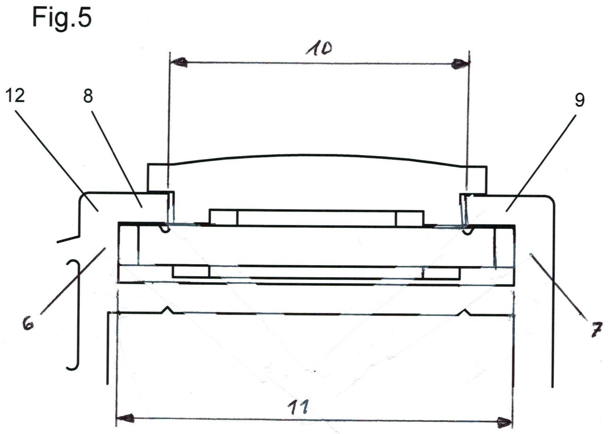

In der Fig. 1 ist der Nutstein 1 dargestellt. Der Nutstein 1 hat einen Fuß 2, der eine im Wesentlichen quaderförmige Form hat. Die Längserstreckung 3 und die Breite 4 sind auf die Abmessungen der Nut 5 (Fig. 5) abgestimmt. Die Nut 5 wird durch zwei parallele Nutstege 6 und 7 begrenzt. Die Nutstege 6 und 7 enden in zwei aufeinander zuweisenden Leisten 8 und 9. Die Leisten 8 und 9 weisen einen Abstand 10 auf. Die Nutstege 6 und 7 sind durch das Maß 11 beabstandet. Die Nutstege 6 und 7 bilden auf der Oberseite 12 eine Auflage für ein Beschlagteil. Das Profil 13 dient zur Bildung eines Flügels und die Nut 5 zur Aufnahme eines Treibstangenbeschlages.

Die Breite 4 des Nutsteins 1 ist auf den Abstand 10 der Leisten 8 und 9 abgestimmt und erlaubt es, dass der Nutstein 1 mit seiner Längserstreckung 3 längs der Nut 5 zwischen den Leisten 8 und 9 hindurchgeführt werden kann. Wird der Nutstein 1 quer zur Längserstreckung der Nut 5 verdreht, dann untergreift der Nutstein 1 mit seiner Längserstreckung 3 die Leisten 8, 9.

An dem plattenförmigen Fuß 2 ist ein elastisch verformbares Element 15 angebracht. Das elastische Element 15 ist Teil eines Klemmbereichs, der in der Befestigungsstellung des Nutsteins 1 unter die Leisten 8, 9 greifen. An dem Fuß 2 ist zudem ein Befestigungsansatz 16 angebracht. Der zentrisch angebrachte hülsenartige Befestigungsansatz 16 ist im Ausführungsbeispiel einteilig an einen plattenförmigen Fuß 2 angeformt. Es kann davon abweichend auch vorgesehen werden, dass dieser als hülsenartiges Ergänzungsteil über einen Kupplungsabschnitt mit dem Fuß 2 verbunden wird. Für diesen Fall kann in dem Fuß 2 eine Mehrkantausnehmung vorgesehen werden, in die der Befestigungsansatz 16 eingreift. Der Befestigungsansatz 16 ist auch in diesem Fall hülsenartig und weist einen Werkzeugeingriff 17 auf. Der Werkzeugeingriff 17 ist im Ausführungsbeispiel auch durch den Fuß 2 hindurchgeführt.

Das elastische Element 15 ist als Kunststoffteil ausgelegt und greift nach dem Ausführungsbeispiel der Fig. 1 mit einem tropfenförmigen Ansatz 18 in eine randoffene Ausnehmung 19 des Fußes 2 ein. Das von dem Ansatz 18 gegenüberliegende Ende des elastischen Elements 15 ist mit einer Nut 20 versehen. Dadurch umgreift das Element 15 den Fuß 2 auf beiden Planseiten des Fußes 2. Um die Stabilität des Nutsteins 7 zu maximieren ist vorgesehen, dass der Fuß 2 als Metallteil ausgelegt ist.

Die Anordnung des Elementes 15 bewirkt, dass das Element 15 nach einer Verdrehung des Nutsteins 1 an den Nutstegen 6, 7 also den Längsseitenwand der T-Nut 5 anliegt. Die gewählte Anordnung bewirkt eine Entkopplung des Bauteils mit dem Nutstein und dem Flügelprofil, so dass das Bauteil in der Beschlagaufnahmenut beweglich bleibt und gegebenenfalls entstehende Geräusche bei der Betätigung reduziert werden. Das elastische Element 15 lässt eine annähernd 90°-Drehung des Nutsteins 1 zu und bewirkt ein sicheres Zusammenwirken des Nutsteins 1 mit der Nut 5. Dabei gleicht das an jedem Längsende 21 des Fußes 2 angebrachte Element 15 Toleranzen oder unterschiedliche Maße 11 oder Verformungen der Nut 5 aus. Zudem klemmt das Element 15 den Nutstein 1 lösbar fest. Dadurch kann die Verbindung durch den Nutstein 1 sowohl mit den Nutstegen 6, 7 als auch mit den Leisten 8, 9 reibungsoptimiert ausgestaltet werden.

Um den Nutstein 1 in einer Montagelage festzulegen sind auf der der Planfläche 23 zugewandten Oberseite 24 des Fußes 2 Rastausnehmungen 25 vorgesehen und auf der dem Nutstein1 zugewandten Planfläche 23 des Bauteils 26 sind Rastvorsprünge 27 angebracht, welche in bevorzugten Befestigungslagen in die Rastausnehmungen 25 eingreifen. Der Nutstein 1 lässt sich dadurch in bevorzugten Stellungen bezogen auf das Bauteil 26 fixieren und signalisiert der montierenden Person die jeweilige Position. Der Nutstein 1 ist in einer Ausnehmung 28 auf der Unterseite des Bauteils 26 angebracht. Oberhalb der Ausnehmung 28 ist eine Leiste 29 zur Auflage auf den Leisten 8, 9 der Nut 5 vorgesehen. Die Leisten 8, 9 werden zwischen der Leiste 29 und dem Nutstein 1 aufgenommen.

### Bezugszeichenliste

- 1: Nutstein
- 2: Fuß
- 3: Längserstreckung
- 4: Breite
- 5: Nut
- 6: Nutsteg
- 7: Nutsteg
- 8: Leiste
- 9: Leiste
- 10: Abstand
- 11: Maß
- 12: Oberseite
- 13: Profil
- 14 15: elastisch verformbares Element
- 16: Befestigungsansatz
- 17: Werkzeugeingriff
- 18: Ansatz
- 19: Ausnehmung
- 20: Nut
- 21: Längsende
- 22 23: Planfläche
- 24: Oberseite
- 25: Rastausnehmungen
- 26: Bauteils
- 27: Rastvorsprung
- 28: Ausnehmung
- 29: Leiste

## Patentansprüche

1. Nutstein (1), der zur Kraftübertragung in eine T-förmige Nut (5) eines Konstruktionsprofils (13) einen Klemmbereich aufweist, wobei der Klemmbereich mit seiner Schmalseite in die Nut (5) des Profils (13) eintaucht und sich nach einem beim Montagevorgang vorgenommenen Verdrehen des Nutsteins (1) nach oben in der T-Nut (5) formschlüssig abstützt, wobei der Nutstein (1) eine Längserstreckung (3) und Breite (4) besitzt, die derart ausgestaltet sind, dass er in der Montageposition des Nutsteins (1) den Bereich der T-Nut (5) des Profils (13) so ausfüllt, dass ein Verdrehen des Nutsteins (1) nicht mehr möglich ist, **dadurch gekennzeichnet, dass** an dem Klemmbereich ein elastisch verformbares Element (15) angebracht ist, welches an einem Nutsteg (6, 7) der Nut (5) anliegt.

2. Nutstein (1) nach Anspruch 1, **dadurch gekennzeichnet,**
**dass** auf der der Planfläche (23) zugewandten Oberseite des Fußes (2) Rastausnehmungen (25) vorgesehen sind, auf der Fläche des Bauteils sind Rastvorsprünge (27) angebracht, welche in bevorzugten Befestigungslagen in die Rastausnehmungen (25) eingreifen.

3. Nutstein (1) nach einem der Ansprüche 1 und 2, **dadurch gekennzeichnet, dass** der Fuß (2) als Metallteil ausgelegt ist.

4. Nutstein (1) nach einem der Ansprüche 1 bis 3, **dadurch gekennzeichnet, dass** der Fuß (2) randoffene Ausnehmungen (19) zur Aufnahme eines Befestigungsansatzes (18) des elastischen Elements (15) aufweist.

5. Nutstein (1) nach einem der Ansprüche 1 bis 4, **dadurch gekennzeichnet, dass** der Fuß (2) einen zentrisch angebrachten hülsenartigen Befestigungsansatz (16) aufweist.

6. Nutstein nach Anspruch 5, **dadurch gekennzeichnet,**
**dass** der Befestigungsansatz (16) einen Werkzeugeingriff (17) aufweist.
